# EUROPEAN PATENT SPECIFICATION

(11) **EP 3 105 734 B1**
(45) Date of publication and mention of the grant of the patent: **07.10.2020**
(21) Application number: 15749468.3
(22) Date of filing: 21.01.2015
(51) Int. Cl.: H04W 4/021, H04W 4/02, H04W 4/33, H04W 4/029, H04L 29/08, G01S 5/02, G01S 5/14, G01S 11/06, G06Q 30/02

(54) **AUTOMATED LEARNING OF STORE TOPOGRAPHY USING IN-STORE LOCATION SIGNALS**
AUTOMATISIERTES LERNEN DER SPEICHERTOPOGRAPHIE MITHILFE VON STANDORTSIGNALEN IM SPEICHER
APPRENTISSAGE AUTOMATISÉ DE TOPOGRAPHIE DE MAGASIN À L'AIDE DE SIGNAUX D'EMPLACEMENT DANS UN MAGASIN

(30) Priority: 14.02.2014 US 201414181018
(43) Date of publication of application: 21.12.2016
(73) Proprietor: Google LLC, Mountain View, CA 94043 (US)
(72) Inventor: STUTTLE, Matthew, Nicholas, Haywards Heath London SW1W 9TQ (GB); SCELLATO, Salvatore, Haywards Heath London SW1W 9TQ (GB)
(74) Representative: Bull, Duncan Richard
(86) International application number: PCT/US2015/012321
(87) International publication number: WO 2015/123002

(56) References cited:
- EP-A1- 2 671 373
- WO-A1-2013/065042
- KR-A- 20060 056 390
- US-A1- 2006 087 474
- US-A1- 2010 109 864
- US-A1- 2011 178 863
- US-A1- 2012 115 512
- US-A1- 2013 281 084
- US-A1- 2013 344 886

## Description

### TECHNICAL FIELD

The present disclosure relates generally to a topography system, and more particularly to methods and systems that determine a device location in a merchant store without knowledge of the store's topography.

### BACKGROUND

Smartphones and other mobile devices are being used in new ways to streamline interactions between consumers and merchants. Methods of providing advertisements, coupons, payment transactions, and other interactions are changing quickly as mobile device technology improves.

Location data from a mobile device can be used for numerous applications. Many applications use the location data for locating friends, playing games, and assisting a user with directions, for example. The location data can also be used to alert a user when the user and the user's device are in the vicinity of a point of interest.

In conventional point of interest alert systems within a merchant location, the location of each beacon is marked to represent a known point of interest. For example, a beacon placed near a location of a new product display is marked so that the beacon, and the information provided in response to communicating with the beacon, is associated with the new product display. However, associating the beacon with the correct point of interest and the correct response information can be troublesome for the merchant's employees and is prone to error.

US 2013/0344886 A1 describes techniques related to access point location identification based on absolute and relative harvesting. WO 2013/065042 A1 describes techniques related to generating a location fingerprinting map. EP 2 671 373 A1 relates to mobile location determination.

### SUMMARY

The invention is defined by the independent claims. Developments of the invention are defined in the dependent claims.

In certain example aspects described herein, a method for determining a merchant store's topography and a user's location within the topography comprises beacon responses received by a user device. A merchant places point of interest (POI) beacons, such as Bluetooth beacons, sticker beacons, or other signal transmitters at various locations in the store. A user enables an application on the user device that allows the device to transmit probing requests to the beacons placed in the store and transmit data received in response to the probing requests to a detection system. Each time a new POI beacon response is received, the user device logs the location of the user device when the response was received, the signal strength, and/or a time that the response was received.

The detection system receives the POI beacon responses from the user device, and using a predictive model or trained classifier model, the detection system predicts the store's topography based on the beacon information received from the user device. In an example embodiment, the topography of the store is determined based on the POI beacon data such that the detection system can determine the sequence of known locations based on the unlabeled sequence of POI beacon transmission. The determined topography may be used to provide information to the user when the user is located in a particular location in the store.

These and other aspects, objects, features, and advantages of the example embodiments will become apparent to those having ordinary skill in the art upon consideration of the following detailed description of illustrated example embodiments.

### BRIEF DESCRIPTION OF THE DRAWINGS

Figure 1 is a block diagram depicting a topography system, in accordance with certain example embodiments.
Figure 2 is a block flow diagram depicting a method for determining user device locations, in accordance with certain example embodiments.
Figure 3 is a block flow diagram depicting a method for receiving point of interest beacon responses, in accordance with certain example embodiments.
Figure 4 is a block diagram depicting a computer machine and module, in accordance with certain example embodiments.

### DETAILED DESCRIPTION OF THE EXAMPLE EMBODIMENTS

### Overview

The example embodiments described herein provide computer-implemented techniques for determining a merchant store's topography based on beacon responses received from a user device. In an example embodiment, the merchant store's topography comprises an arrangement of physical features within the merchant store. For example, a location of the cntrancc/cxit, a location of various product or sales displays, a location of one or more point of sale (POS) terminals, and a location of other items of interest to the user. In an example embodiment, a merchant places point of interest beacons, such as Bluetooth beacons, sticker beacons, or other signal transmitters at various locations in the store. A user enables an application on the user device that allows the device to transmit probing requests to the beacons placed in the store and to transmit data received in response to the probing requests to a detection system.

A detection system creates a predictive model or trains a classifier model to predict the store's topography based on the beacon information received from the user device. In an example embodiment, the predictive model is an artificial neural network or other form of adaptive system model, wherein the system analyzes data and relationships to find patterns in the data. In another example embodiment, the classifier model is a Gaussian Mixture Model, decision tree, Markov Decision Process, or other mathematical framework for modeling decision making. In an example embodiment, the model is trained based on historical data of store topography to predict a location of each beacon based on the data transmitted by the user device. In an example embodiment, the process is an ongoing learning proccss, wherein data is continuously added to the detection system and the model is continuously updated.

The user operating the user device enters the store, and the user device transmits a probing request for a first point of interest (POI) beacon. In an example embodiment, the first POI beacon is located at or near the entrance of the store. In an example embodiment, the probing request comprises a request to pair or connect with a Bluetooth beacon. In another example embodiment, the probing request comprises a request to join a WiFi network. In yet another example embodiment, the probing request comprises a request to establish a near field communication (NFC) connection with the beacon. In another example embodiment, the probing request comprises a request to establish a short distance pairing or connection.

The first POI beacon responds to the probing request and the user device logs the location of the user device when the response was received, the signal strength of the response, and/or a time that the response was received. In an example embodiment, the user device starts a new session of logging POI beacon responses when the user enters the store and the time that the response was received is time zero (0). The user device continues transmitting a probing request for additional POI beacons. Each time a new POI beacon response is received, the user device logs the location of the user device when the response was received, the signal strength, and/or the time relative to time zero that the response was received. In an example embodiment, the user device transmits the POI beacon response information to the detection system after each response is received. In another example embodiment, the user device logs the responses and transmits more than one response to the detection system. For example, the user device logs all beacon response relative to time zero and transmits all responses to the detection system at the same time.

The detection system receives the POI beacon response from the user device with the location data, the signal strength of the response, and/or a time that the response was received, and uses the data to determine the location of each of the beacons. For example, the data is added to the predictive model and the model determines the probability that POI Beacon A is located near the entrance and POI Beacon B, which was encountered next, is near a sales aisle or display. In an example embodiment, the topography of the store is determined based on the POI beacon data such that the detection system can determine the sequence of known locations based on the unlabeled sequence of POI beacon transmission. In an example embodiment, the determined topography is used to provide incentives or rewards to the user when the user is located in a particular location in the store. For example, if the user is located near a POI beacon for a sales display, a coupon can be provided to the user. In another example, information can be provided to the user alerting the user to price comparisons, additional actions the user can take, competing products, merchant incentives for purchasing a particular product, or any other information helpful to the user.

Various example embodiments will be explained in more detail in the following description, read in conjunction with the figures illustrating the program flow.

### Example System Architectures

Turning now to the drawings, in which like numerals indicate like (but not necessarily identical) elements throughout the figures, example embodiments are described in detail.

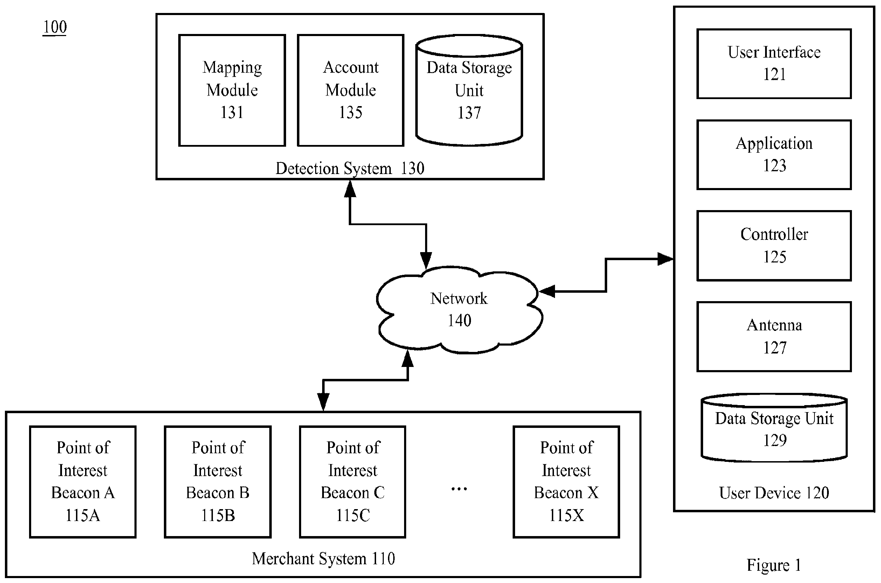

Figure 1 is a block diagram depicting a topography system 100, in accordance with certain example embodiments. As depicted in Figure 1, the exemplary operating environment 100 comprises a merchant computing system 110, a user computing device 120, and a detection computing system 130 that are configured to communicate with one another via one or more networks 140. In another example embodiment, two or more of these systems (including systems 110, 120, and 130) are integrated into the same system. In some embodiments, a user associated with a device must install an application and/or make a feature selection to obtain the benefits of the techniques described herein.

Each network 140 includes a wired or wireless telecommunication mechanism by which network systems (including systems 110, 120, and 130) can communicate and exchange data. For example, each network 140 can be implemented as, or may be a part of, a storage area network (SAN), personal area network (PAN), a metropolitan area network (MAN), a local area network (LAN), a wide area network (WAN), a wireless local area network (WLAN), a virtual private network (VPN), an intranet, an Internet, a mobile telephone network, a card network, Bluetooth, near field communication network (NFC), any form of standardized radio frequency, or any combination thereof, or any other appropriate architecture or system that facilitates the communication of signals, data, and/or messages (generally referred to as data). Throughout this specification, it should be understood that the terms "data" and "information" are used interchangeably herein to refer to text, images, audio, video, or any other form of information that can exist in a computer-based environment.

In an example embodiment, each network system (including systems 110, 120, and 130) includes a device having a communication module capable of transmitting and receiving data over the network 140. For example, each network system (including systems 110, 120, and 130) may comprise a server, personal computer, mobile device (for example, notebook computer, tablet computer, netbook computer, personal digital assistant (PDA), video game device, GPS locator device, cellular telephone, Smartphone, or other mobile device), a television with one or more processors embedded therein and/or coupled thereto, or other appropriate technology that includes or is coupled to a web browser or other application for communicating via the network 140. In the example embodiment depicted in Figure 1, the network systems (including systems 110, 120, and 130) are operated by merchants, users, and a detection operator, respectively.

The merchant system 110 comprises two or more point of interest (POI) beacons 115 that are capable of transmitting a signal or communicating with the user device 120. In an example embodiment, the POI beacons 115 comprise Bluetooth beacons, sticker beacons, or other signal transmitters. In an example embodiment, a merchant places two or more POI beacons at various locations in a store. A user enables an application 123 on the user device 120 that allows the device 120 to transmit probing requests to the POI beacons 115 placed in the store and to transmit data received in response to the probing requests to the detection system 130.

In an example embodiment, the user device 120 may be a personal computer, mobile device (for example, notebook, computer, tablet computer, netbook computer, personal digital assistant (PDA), video game device, GPS locator device, cellular telephone, Smartphone or other mobile device), television, or other appropriate technology that includes or is coupled to a web server, or other suitable application for interacting with web page files. The user can use the user device 120 to authorize or enable the transmission of the probing requests via a user interface 121 and the application 123. The application 123 is a program, function, routine, applet or similar entity that exists on and performs its operations on the user device 120. For example, the application 123 may be one or more of a shopping application, merchant system 110 application, an Internet browser, a digital wallet application, a loyalty card application, another value-added application, a user interface 121 application, a location detection application, or other suitable application operating on the user device 120. In some embodiments, the user must install an application 123 and/or make a feature selection on the user device 120 to obtain the benefits of the techniques described herein.

In an example embodiment, the user interface 121 enables the user to interact with the application 123 on the user device 110. For example, the user interface 121 may be a touch screen, a web page, a voice based interface, or any other interface, which allows the user to provide input and receive output from the application 123.

An example user device 120 comprises a controller 125. In an example embodiment, the controller 125 is a Bluetooth link controller. The Bluetooth link controller may be capable of sending and receiving data, performing authentication and ciphering functions, and directing how the user device 120 will listen for transmissions from each POI beacon 115 or configure the user device 120 into various power-save modes according to the Bluetooth-specified procedures. In another example embodiment, the controller 125 is a Wi-Fi controller or an NFC controller capable of performing similar functions.

In an example embodiment, the antenna 127 is a mechanism of communication between the user device 120 and each POI beacon 115. In an example embodiment, once the application 123 has been activated and prioritized, the controller 125 is notified of the state of readiness of the user device 120. The controller 125 outputs through the antenna 127 a radio signal, or listens for radio signals from each POI beacon 115. An example controller 125 receives a radio wave communication signal from each POI beacon 115 through the antenna 127. The controller 125 converts the signal to readable bytes. In an example embodiment, the bytes comprise digital information, such as a signal strength and probing request response. The controller 125 transmits the response to the application 123 for processing.

In an example embodiment, the data storage unit 129 may be a separate memory unit resident on the user device 120. An example data storage unit 129 enables storage of user contact details for retrieval of a user's detection system 130 account. In another example embodiment, the data storage unit 129 enables storage of each POI beacon 115 probing request response. In an example embodiment, the data storage unit 129 can include any local or remote data storage structure accessible to the user device 120 suitable for storing information. In an example embodiment, the data storage unit 129 stores encrypted information, such as HTML5 local storage.

An example user device 120 communicates with the detection system 130. An example detection system 130 comprises a mapping module 131, an account module 135, and a data storage unit 137. In an example embodiment, the user device 120 transmits the probing request responses to the mapping module 131. In an example embodiment, each probing request response comprises a time, a signal strength, a user device 120 location, and other information relevant to determining a location of the POI beacon. In another example embodiment, the probing request response further comprises a user account or user device 120 identifier. In this example embodiment, the account module 135 can determine if the user has an offer, reward, or other saved information relative to the location of the user device 120 when the probing request is received.

In an example embodiment, the probing request responses, the store topography, and the user account information is saved in the data storage unit 137. In an example embodiment, the data storage unit 137 can include any local or remote data storage structure accessible to the detection system 130 suitable for storing information. In an example embodiment, the data storage unit 137 stores encrypted information, such as HTML5 local storage.

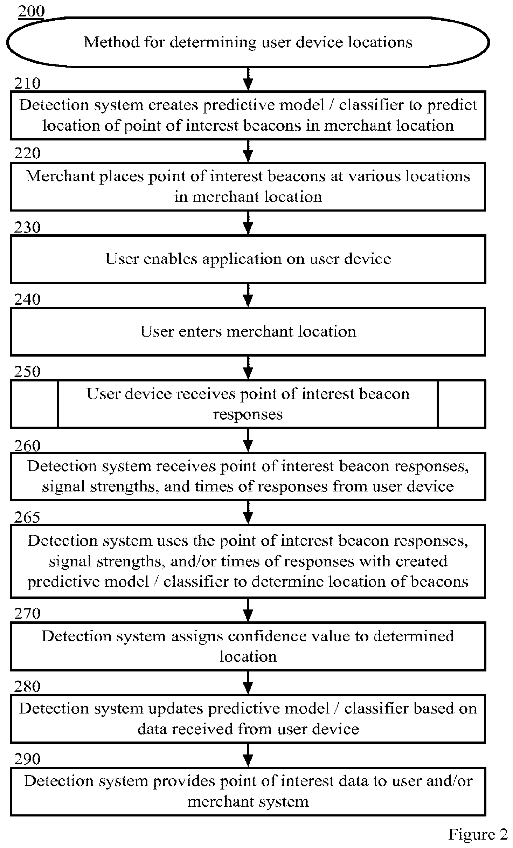

The components of the example operating environment 100 are described hereinafter with reference to the example methods illustrated in Figures 2-3. The example methods of Figures 2-3 may also be performed with other systems and in other environments.

### Example System Processes

Figure 2 is a block flow diagram depicting a method 200 for determining user device 120 locations, in accordance with certain example embodiments. The method 200 is described with reference to the components illustrated in Figure 1.

In block 210, the detection system 130 creates a predictive model or classifier to that will be used to predict the location of various POI beacons 115 in a store. In an example embodiment, the predictive model or classifier is an artificial neural network or other form of adaptive system model, wherein the model analyzes data and relationships to find patterns in data. An artificial neural network is a computational module that functions to process information, such as studying behavior, pattern recognition, forecasting, and data compression. An example predictive model or classifier may be hardware and software based or purely software based and run in computer models. In an example embodiment, the predictive model or classifier model comprises inputs (for example probing request responses, signal strengths, and time stamps) that are multiplied by weights and then computed by a mathematical function to determine the output (for example, a store topography). Depending on the weights, the computation will be different. In an example embodiment, an algorithm is used to adjust the weights of the predictive model or classifier in order to obtain the desired output from the network (for example, to accurately identify a store topography). In an example embodiment, this process is an ongoing learning process, wherein POI beacon 115 responses are continuous added and the model/classifier is updated. As more training data is fed into the model, it will continuously improve.

In another example embodiment, the classifier model is a Gaussian Mixture Model, decision tree, Markov Decision Process, or other mathematical framework for modeling decision making. In an example embodiment, the model is trained based on historical data of store topography to predict a location of each POI beacon 115 based on the data transmitted by the user device 120. In an example embodiment, the process is an ongoing learning process, wherein data is continuously added to the detection system 130 and the model is continuously updated.

In an example embodiment, the predictive model or classifier is used to determine a store topography so the user is notified or provided with an offer or additional information based on a determined location of the user device 120 in the store.

In block 220, the merchant places POI beacons 115 at various locations in the merchant's location. In an example embodiment, two or more POI beacons 115a, 115b, ... 115x are placed in the merchant's location. In this embodiment, a POI beacon 115 is placed near the entrance, sales aisles, one or more product displays, point of sale (POS) terminals, exit, and other identifiable location within the merchant location. In an example embodiment, each POI beacon 115 is a Bluetooth beacon, sticker beacon, or other signal transmitter that is capable of responding to a probing request or otherwise communicating with a user device 120.

In an example embodiment, each POI beacon is placed in a location without mapping the location or associating a beacon response with the location of the beacon. For example, POI beacon A 115A is placed near a sales display for Brand Z soda, and POI beacon B 115B is placed near a sales display for Brand X laundry detergent. When the user device 120 interacts with POI beacon B 115B, the beacon 115B responds without providing information about the Brand X laundry detergent. In an example embodiment, each POI beacon 115 responds to a probing request with a similar probing request response. Continuing with the previous example, POI beacon B 115B responds with the same response as POI beacon A 115A. In an example embodiment, the user device 120 is able to determine a signal strength and time of the response when the response is received from the POI beacon 115. In another example embodiment, each POI beacon 115 provides additional information such as a time, signal strength, merchant identification information, or other information useful to the user device 120 and/or detection system 130.

In block 230, the user enables an application 123 on the user device 120 to authorize the transmission of the probing responses to the detection system 130. In an example embodiment, the user enables the application 123 to allow the user device 120 to transmit probing requests to the POI beacons 115 placed in a merchant location and transmit data to the detection system 130.

In an example embodiment, the user has an account maintained by or accessible to the detection system 130. In this embodiment, the user is provided with offers, rewards, incentives, or other content associated with the user's account in response to a determination of the location of the user device 120 in the merchant's location. In another example embodiment, the user does not have an account maintained by or accessible to the detection system 130. In this embodiment, the information received from the user is not associated with a user account and the user is provided with offers, rewards, incentives, or other content in response to a determination of the location of the user device 120 in the merchant's location.

In block 240, the user enters the merchant location. In an example embodiment, the merchant location is a merchant store. In another example embodiment, the merchant location is a restaurant, gas station, convenience store, warehouse, office building, mall, shopping center, retail location, or other business location.

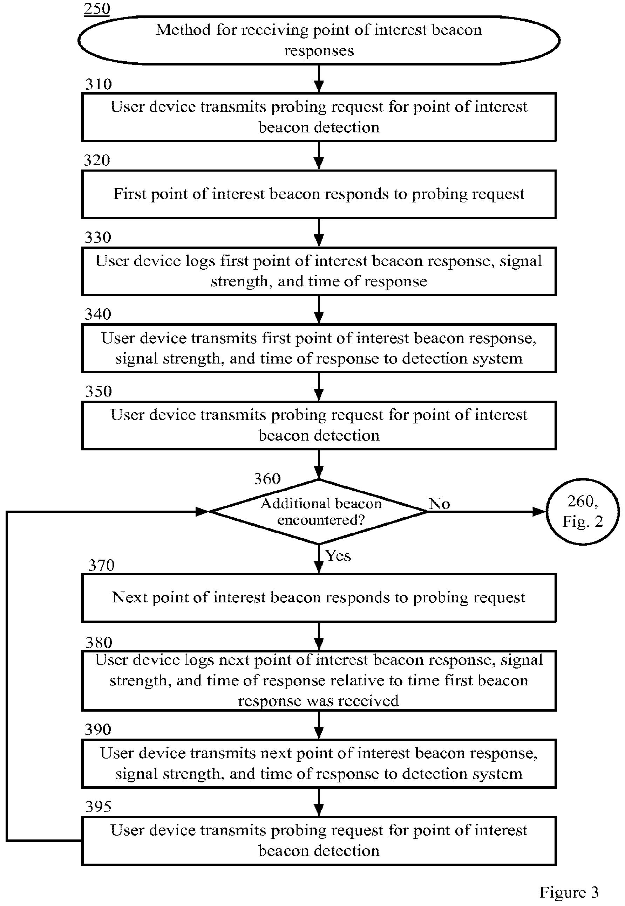

In block 250, the user device 120 receives POI beacon 115 responses. In an example embodiment, the user device 120 continuously transmits probing requests, requests to join networks, requests to pair with detected devices, or other forms of communication requests. In another example embodiment, the user activates the application 123 prior to entering a new merchant location. The method for receiving POI beacon 115 responses is described in more detail hereinafter with reference to the methods described in Figure 3.

Figure 3 is a block flow diagram depicting a method 250 for receiving POI beacon 115 responses, in accordance with certain example embodiments, as referenced in block 250. The method 250 is described with reference to the components illustrated in Figure 1.

In block 310, the user device 120 transmits a probing request for a POI beacon 115. In an example embodiment, the user enables the user device 120 to transmit the probing request by opening the application 123 or authorizes the device 120 to transmit the request. In an example embodiment, the probing request comprises a request to communicate with the POI beacon 115 via a near field communication (NFC), WiFi, Bluetooth, or other form of short-range communication channel. For example, the first POI beacon 115 is a NFC sticker and the probing request comprises a request to communicate with or receive information from the NFC sticker.

In another example embodiment, the probing request comprises a request to join, access, or communicate via a network 140 controlled or transmitted by the point of interest beacon 115. For example, the POI beacon 115 comprises a WiFi network at the merchant location and the probing request comprises a request to join or communicate via the WiFi network.

In yet another example embodiment, the probing request comprises a request to pair with or receive information via a Bluetooth communication. For example, the POI beacon 115 comprises a Bluetooth device and the probing request comprises a detection of the device.

In another example embodiment, the probing request comprises a request to establish a short distance pairing or connection by a "tap" or brief physical contact between the user device 120 and the POI beacon 115. For example, the user may tap the user device 120 to check-in or to enable an application 123 on the user device 120.

In block 320, the first POI beacon 115A responds to the probing request. In an example embodiment, the first POI beacon is located at or near the entrance of the store. In an example embodiment, the first POI beacon 115A response comprises a notification or detection signal transmitted by the first POI beacon 115A. In another example embodiment, the response comprises a notification or detection of the first POI beacon 115A by the user device 120. In other example embodiments, the response comprises an authorization to join a WiFi network or an establishment of a short-range communication channel.

In block 330, the user device 120 logs the first POI beacon 115A response. In an example embodiment, the user device 120 logs a time that the response was received. In an example embodiment, the user device 120 starts a new session of logging POI beacon 115 responses when the user enters the store, and the time that the response was received is time zero (0). In an example embodiment, the user opens the application 123 and designates a new session or indicates that the user is entering a new location. The time that the first POI beacon 115A response is logged as time zero (0). In another example embodiment, a time stamp is logged. In an example embodiment, the user device 120 can determine that a new session has begun based on an amount of time since receiving a prior POI beacon 115 response.

In an example embodiment, the user device 120 logs the signal strength of the first POI beacon 115A response. For example, the user device 120 logs the strength of the WiFi, NFC, Bluetooth, or other short-range communication signal received from the first POI beacon 115A. In an example embodiment, the signal strength provides an estimate on the distance the user device 120 is from the POI beacon 115. For example, a weak signal strength indicates that the user device 120 is farther away from the POI beacon 115, while a stronger signal strength indicates that the user device 120 is closer to the POI bcacon.

In another example embodiment, the user device 120 logs the location of the user device 120 when the response was received. In an example embodiment, the user enables a feature on the user device 120 to authorize the determination of a geographic location of the user device 120 when the first POI beacon 115A response is received. In an example embodiment, the detection system 130 and/or user device 120 can determine that the user device 120 entered a new merchant location based on the logged location. In an example embodiment, the user device 120 utilizes the global positioning system (GPS) to log the approximate longitude and latitude of the user device 120. In another example embodiment, the user device 120 uses another satellite-based positioning system to log the location data. In yet another example embodiment, the user device 120 calculates the distance of the device 110 from the nearest Wi-Fi locations, radio towers, cell towers, or combinations of these items to determine its position. In yet another example embodiment, the first POI beacon 115A response comprises the location data.

In block 340, the user device 120 transmits notification of the first POI beacon 115A response to the detection system 130. In an example embodiment, the user device 120 transmits notification of each POI beacon 115 response to the detection system 130 in real time or near real time with receiving each response. In another example embodiment, the user device 120 logs the responses and transmits more than one response to the detection system 130. For example, the user device 120 logs all beacon response relative to time zero and transmits all responses to the detection system 130 at the same time. In yet another example embodiment, the user device 120 transmits the POI beacon 115 response(s) to the detection system 130 upon authorization or request of the user. In an example embodiment, the transmission to the detection system 130 comprises one or more of notification that a POI beacon 115 response was received, a signal strength of the response, a time of the response, a location of the user device 120 when the response was received, and/or a user identification. In an example embodiment, the user authorizes which data is transmitted to the detection system 130.

In an example embodiment, the detection system 130 determines that the first POI beacon 115A is located near an entrance to the merchant location based on a determination that the first POI beacon 115A is the first POI beacon 115 encountered by the user device 120 in a chain or series of POI beacons 115.

In block 350, the user device 120 transmits a new probing request for a POI beacon 115 using the methods previously described with reference to block 310 in Figure 3.

In block 360, the user device 120 determines whether additional POI beacon 115 responses are received. In an example embodiment, the user device 120 continues transmitting a probing request until a response is received, a designated time-out is reached, the user disables the transmission of the request, or a response is received from the detection system 130.

If an additional POI beacon 115 response is received, the method 250 proceeds to block 370 in Figure 3. In block 370, the next POI beacon 115 response is received using the methods previously described with reference to block 320 in Figure 3.

In block 380, the user device 120 logs the next POI beacon 115B response using the methods previously described with reference to block 330 in Figure 3. In an example embodiment, the user device 120 logs a time that the response was received. For example, a time relative to time zero (0) or a time stamp. In an example embodiment, the user device 120 logs the signal strength of the next POI beacon 115B response. In another example embodiment, the user device 120 logs the location of the user device 120 when the response was received.

In block 390, the user device 120 transmits notification of the next POI beacon 115B response to the detection system 130 using the methods previously described with reference to block 340 in Figure 3. In an example embodiment, the user device 120 transmits notification of each POI bcacon 115 response to the detection system 130 in real time or near real time with receiving each response. In another example embodiment, the user device 120 logs the responses and transmits more than one response to the detection system 130.

In block 395, the user device 120 transmits a new probing request for a POI beacon 115 using the methods previously described with reference to block 310 in Figure 3.

From block 395, the method 250 proceeds to block 360 in Figure 3.

Returning to block 360 in Figure 3, the method 250 repeats the methods described in blocks 360 through 395 of Figure 3 until no additional POI beacon 115 responses are received.

If no additional POI beacon 115 responses are received, the method 250 proceeds to block 260 in Figure 2.

Returning to Figure 2, in block 260, the detection system 130 receives the POI beacon 115 response from the user device 120. In an example embodiment, the user device 120 transmits notification of each POI beacon 115 response to the detection system 130 in real time or near real time with receiving each response. In this embodiment, the detection system 130 receives each response and the methods described in blocks 265 through 290 may be preformed after each response is received or after two or more responses are received.

In another example embodiment, the user device 120 logs the multiple responses and transmits them to the detection system 130. In this embodiment, the detection system 130 receives the multiple responses and the methods described in blocks 265 through 290 may be preformed after the multiple responses are received or at any time thereafter.

In block 265, the detection system 130 uses the response(s) received from the user device 120 to determine the location of the POI beacon(s) 115. In an example embodiment, the received responses are added to the predictive model and the model determines a probability that each POI beacon 115 is in a particular location in the store's topography. For example, the detection system 130 determines the probability that POI Beacon A 115A is located near the entrance and POI Beacon B 115B, which was encountered next, is near a sales aisle or display. In an example embodiment, the detection system 130 can determine a sequence of known locations based on the unlabeled sequence of POI beacon 115 transmissions.

In an example embodiment, the signal strength provides an estimate on the distance the user device 120 is from the POI beacon 115. For example, a weak signal strength indicates that the user device 120 is farther away from the POI beacon 115, while a stronger signal strength indicates that the user device 120 is closer to the POI beacon. Multiple POI beacon 115 responses from the same POI beacon 115 and their signal strength can be used to calculate the probable source location for the POI beacon 115.

In an example embodiment, the detection system 130 uses the responses received to determine a path or route taken by the user device 120 in the store. For example, the user device 120 passed POI Beacon A 115A first, then POI Beacon B 115B, and finally POI Beacon C 115C. This provides a set of temporarily correlated signals that can be marked up and used to train the classifier. The trained classifier will use the temporal context (for example, the path taken by the user device 120) and label it with the detected POI beacons 115. Continuing with the previous example, it will label the detected POI beacons 115 based on the path taken, so POI Beacon A 115A, which was encountered first, is located at the entrance. POI Beacon B 115B, which was encountered second, is located near the sales aisle. Finally, POI Beacon C 115C, which was encountered last, is located near the point of sale terminal.

In an example embodiment, the detection system 130 determines that a POI beacon 115 is located near a POS terminal at the merchant location based on a determination that the POI beacon 115 is a last POI beacon 115 encountered by the user device 120 in a chain of POI beacons 115.

In block 270, the detection system 130 assigns a confidence value to the determined location(s). In an example embodiment, the store topography is periodically changed. For example, POI Beacon A 115A was located near the entrance, but was later moved to a product display near the sales aisles. The detection system 130 may assign a confidence value to the determined location of each POI beacon 115. In an example embodiment, the confidence value is obtained by calculating a likelihood that the determined location(s) are correct given the trained model or classifier. For example, the detection system 130 determines whether POI beacon 115 responses have been previously received from the same location within the merchant location. If the POI beacon 115a response was in the same location previously, it can be fairly confident that the response received in that location is from the same POI beacon 115a. However, if a POI beacon 115a response is received from a different location within the merchant location than a previous known or reported location, the detection system 130 will be less confident that the response received is in the same POI beacon 115a. However if multiple responses are received for POI Beacon A 115a from the same new location, then the detection system 130 can determine that the new location is the proper location. In an example embodiment, a predefined number of POI beacon 115a responses received from the same POI beacon 115a with the same location information can provide a higher confidence value. Accordingly, if the location of the POI beacon 115a changes, the confidence value will increase as additional POI beacon 115a responses with the same location are received.

In an example embodiment, a confidence value that has dropped below a predetermined threshold may signal a change in the stores topography or a change in the placement of one or more POI beacons 115. Once the confidence value drops below the threshold, the model or classifier will likely need to be reassessed and/or trained.

In block 280, the detection system 130 updates the predictive model or classifier model based on the responses received from the user device 120. In an example embodiment, the process is an ongoing learning process, wherein data is continuously added to the detection system 130 and the model is continuously updated.

In block 290, the detection system 130 provides POI data to the user and/or the merchant system 110. In an example embodiment, the determined topography is used to provide incentives or rewards to the user when the user is located in a particular location in the store. For example, if the user is located near a POI beacon 115 for a sales display, a coupon can be provided to the user. In another example embodiment, information can be provided to the user alerting the user to price comparisons, additional actions the user can take (for example, watching a video about a product, checking-in at a location, ordering a product at a lower price, retrieving offers, reading product reviews, reading merchant reviews, enabling a user device 120 application, or other prompted user actions), competing products, merchant incentives for purchasing a particular product, or any other information helpful to the user. In another example embodiment, information can be provided to the merchant system 110. For example, a frequency that user devices 120 communicate with a particular POI beacon 115, a percentage of user devices 120 that communicate with a POI beacon 115 located at a point of sale terminal, a path commonly taken by user devices 120, or other information helpful to the merchant system 110.

In an example embodiment, the detection system 130 provides POI data to the user and/or merchant system 110 in response to receiving a POI beacon 115 response from a user device 120 at determined location within the merchant location. For example, the user device 120 transmits a response from POI Beacon A 115a to the detection system 130, and the detection system 130 has previously determined that POI Beacon A 115A is located near an entrance to the merchant location. The user device 120 then transmits a response from POI Beacon B 115B. The detection system 130 had previously determined that POI Beacon B 115B is located near a product display near the entrance of the merchant location. The detection system 130 transmits an offer for the product in the product display to the user device 120 in response to receiving the response from POI Beacon B 115B. Alternatively, the detection system 130 transmits the offer for the product in the product display to the user device 120 in response to receiving the response from POI Beacon A 115A in anticipation that the user device is likely to encounter POI Beacon B 115B.

In another example embodiment, the detection system 130 transmits offers to the user device 120 that are to be redeemed in the merchant location the detection system 130 determines that the user device 120 has left the merchant location or at a time when the detection system 130 determines that the user device 120 is near the POS terminal.

### Other Example Embodiments

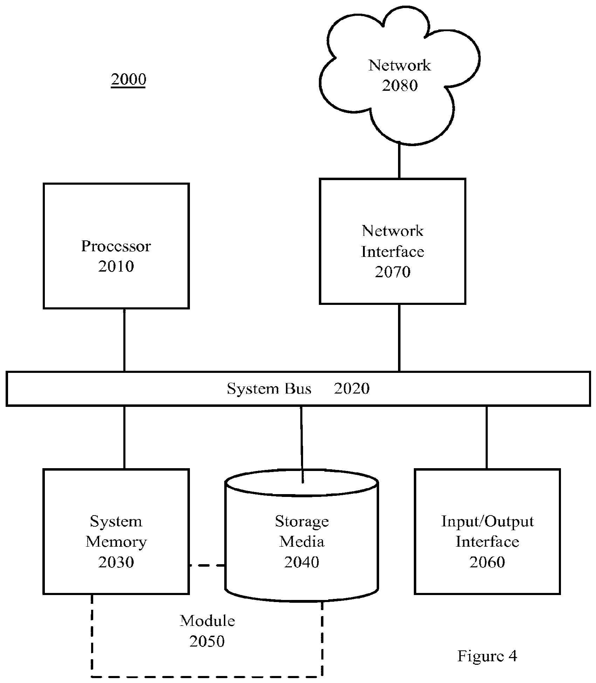

Figure 4 depicts a computing machine 2000 and a module 2050 in accordance with certain example embodiments. The computing machine 2000 may correspond to any of the various computers, servers, mobile devices, embedded systems, or computing systems presented herein. The module 2050 may comprise one or more hardware or software elements configured to facilitate the computing machine 2000 in performing the various methods and processing functions presented herein. The computing machine 2000 may include various internal or attached components such as a processor 2010, system bus 2020, system memory 2030, storage media 2040, input/output interface 2060, and a network interface 2070 for communicating with a network 2080.

The computing machine 2000 may be implemented as a conventional computer system, an embedded controller, a laptop, a server, a mobile device, a smartphone, a set-top box, a kiosk, a vehicular information system, one more processors associated with a television, a customized machine, any other hardware platform, or any combination or multiplicity thereof. The computing machine 2000 may be a distributed system configured to function using multiple computing machines interconnected via a data network or bus system.

The processor 2010 may be configured to execute code or instructions to perform the operations and functionality described herein, manage request flow and address mappings, and to perform calculations and generate commands. The processor 2010 may be configured to monitor and control the operation of the components in the computing machine 2000. The processor 2010 may be a general purpose processor, a processor core, a multiprocessor, a reconfigurable processor, a microcontroller, a digital signal processor (DSP), an application specific integrated circuit (ASIC), a graphics processing unit (GPU), a field programmable gate array (FPGA), a programmable logic device (PLD), a controller, a state machine, gated logic, discrete hardware components, any other processing unit, or any combination or multiplicity thereof. The processor 2010 may be a single processing unit, multiple processing units, a single processing core, multiple processing cores, special purpose processing cores, co-processors, or any combination thereof. According to certain embodiments, the processor 2010 along with other components of the computing machine 2000 may be a virtualized computing machine executing within one or more other computing machines.

The system memory 2030 may include non-volatile memories such as read-only memory (ROM), programmable read-only memory (PROM), erasable programmable read-only memory (EPROM), flash memory, or any other device capable of storing program instructions or data with or without applied power. The system memory 2030 may also include volatile memories such as random access memory (RAM), static random access memory (SRAM), dynamic random access memory (DRAM), and synchronous dynamic random access memory (SDRAM). Other types of RAM also may be used to implement the system memory 2030. The system memory 2030 may be implemented using a single memory module or multiple memory modules. While the system memory 2030 is depicted as being part of the computing machine 2000, one skilled in the art will recognize that the system memory 2030 may be separate from the computing machine 2000 without departing from the scope of the subject technology. It should also be appreciated that the system memory 2030 may include, or operate in conjunction with, a non-volatile storage device such as the storage media 2040.

The storage media 2040 may include a hard disk, a floppy disk, a compact disc read only memory (CD-ROM), a digital versatile disc (DVD), a Blu-ray disc, a magnetic tape, a flash memory, other non-volatile memory device, a solid state drive (SSD), any magnetic storage device, any optical storage device, any electrical storage device, any semiconductor storage device, any physical-based storage device, any other data storage device, or any combination or multiplicity thereof The storage media 2040 may store one or more operating systems, application programs and program modules such as module 2050, data, or any other information. The storage media 2040 may be part of, or connected to, the computing machine 2000. The storage media 2040 may also be part of one or more other computing machines that are in communication with the computing machine 2000 such as servers, database servers, cloud storage, network attached storage, and so forth.

The module 2050 may comprise one or more hardware or software elements configured to facilitate the computing machine 2000 with performing the various methods and processing functions presented herein. The module 2050 may include one or more sequences of instructions stored as software or firmware in association with the system memory 2030, the storage media 2040, or both. The storage media 2040 may therefore represent examples of machine or computer readable media on which instructions or code may be stored for execution by the processor 2010. Machine or computer readable media may generally refer to any medium or media used to provide instructions to the processor 2010. Such machine or computer readable media associated with the module 2050 may comprise a computer software product. It should be appreciated that a computer software product comprising the module 2050 may also be associated with one or more processes or methods for delivering the module 2050 to the computing machine 2000 via the network 2080, any signal-bearing medium, or any other communication or delivery technology. The module 2050 may also comprise hardware circuits or information for configuring hardware circuits such as microcode or configuration information for an FPGA or other PLD.

The input/output (I/O) interface 2060 may be configured to couple to one or more external devices, to receive data from the one or more external devices, and to send data to the one or more external devices. Such external devices along with the various internal devices may also be known as peripheral devices. The I/O interface 2060 may include both electrical and physical connections for operably coupling the various peripheral devices to the computing machine 2000 or the processor 2010. The I/O interface 2060 may be configured to communicate data, addresses, and control signals between the peripheral devices, the computing machine 2000, or the processor 2010. The I/O interface 2060 may be configured to implement any standard interface, such as small computer system interface (SCSI), serial-attached SCSI (SAS), fiber channel, peripheral component interconnect (PCI), PCI express (PCIe), serial bus, parallel bus, advanced technology attached (ATA), serial ATA (SATA), universal serial bus (USB), Thunderbolt, FireWire, various video buses, and the like. The I/O interface 2060 may be configured to implement only one interface or bus technology. Alternatively, the I/O interface 2060 may be configured to implement multiple interfaces or bus technologies. The I/O interface 2060 may be configured as part of, all of, or to operate in conjunction with, the system bus 2020. The I/O interface 2060 may include one or more buffers for buffering transmissions between one or more external devices, internal devices, the computing machine 2000, or the processor 2010.

The I/O interface 2060 may couple the computing machine 2000 to various input devices including mice, touch-screens, scanners, electronic digitizers, sensors, receivers, touchpads, trackballs, cameras, microphones, keyboards, any other pointing devices, or any combinations thereof. The I/O interface 2060 may couple the computing machine 2000 to various output devices including video displays, speakers, printers, projectors, tactile feedback devices, automation control, robotic components, actuators, motors, fans, solenoids, valves, pumps, transmitters, signal emitters, lights, and so forth.

The computing machine 2000 may operate in a networked environment using logical connections through the network interface 2070 to one or more other systems or computing machines across the network 2080. The network 2080 may include wide area networks (WAN), local area networks (LAN), intranets, the Internet, wireless access networks, wired networks, mobile networks, telephone networks, optical networks, or combinations thereof. The network 2080 may be packet switched, circuit switched, of any topography, and may use any communication protocol. Communication links within the network 2080 may involve various digital or an analog communication media such as fiber optic cables, free-space optics, waveguides, electrical conductors, wireless links, antennas, radio-frequency communications, and so forth.

The processor 2010 may be connected to the other elements of the computing machine 2000 or the various peripherals discussed herein through the system bus 2020. It should be appreciated that the system bus 2020 may be within the processor 2010, outside the processor 2010, or both. According to some embodiments, any of the processor 2010, the other elements of the computing machine 2000, or the various peripherals discussed herein may be integrated into a single device such as a system on chip (SOC), system on package (SOP), or ASIC device.

In situations in which the systems discussed here collect personal information about users, or may make use of personal information, the users may be provided with an opportunity or option to control whether programs or features collect user information (e.g., information about a user's social network, social actions or activities, profession, a user's preferences, or a user's current location), or to control whether and/or how to receive content from the content server that may be more relevant to the user. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over how information is collected about the user and used by a content server.

Embodiments may comprise a computer program that embodies the functions described and illustrated herein, wherein the computer program is implemented in a computer system that comprises instructions stored in a machine-readable medium and a processor that executes the instructions. However, it should be apparent that there could be many different ways of implementing embodiments in computer programming, and the embodiments should not be construed as limited to any one set of computer program instructions. Further, a skilled programmer would be able to write such a computer program to implement an embodiment of the disclosed embodiments based on the appended flow charts and associated description in the application text. Therefore, disclosure of a particular set of program code instructions is not considered necessary for an adequate understanding of how to make and use embodiments. Further, those skilled in the art will appreciate that one or more aspects of embodiments described herein may be performed by hardware, software, or a combination thereof, as may be embodied in one or more computing systems. Moreover, any reference to an act being performed by a computer should not be construed as being performed by a single computer as more than one computer may perform the act.

The example embodiments described herein can be used with computer hardware and software that perform the methods and processing functions described herein. The systems, methods, and procedures described herein can be embodied in a programmable computer, computer-executable software, or digital circuitry. The software can be stored on computer-readable media. For example, computer-readable media can include a floppy disk, RAM, ROM, hard disk, removable media, flash memory, memory stick, optical media, magneto-optical media, CD-ROM, etc. Digital circuitry can include integrated circuits, gate arrays, building block logic, field programmable gate arrays (FPGA), etc.

## Claims

1. A computer-implemented method (200) for determining user locations, comprising:
transmitting (250, 310), by a computing device (120), a first probing request for a first point of interest beacon response from a first point of interest beacon (115A) located in a merchant location;
in response to transmitting the first probing request, receiving (250, 320), by the computing device (120), the first point of interest beacon response from the first point of interest beacon (115A);
logging (250, 330), by the computing device (120), a time zero, the time zero indicating an initial time when the first point of interest beacon response was received by the computing device (120);
transmitting (250, 350), by the computing device (120), additional probing requests for additional point of interest beacon responses from additional point of interest beacons (115B-115X) located at various locations in the merchant location;
in response to transmitting the additional probing requests, receiving (250, 370), by the computing device (120), at least one additional point of interest beacon responses from the additional point of interest beacons (115B-115X);
logging (250, 380), by the computing device (120), a time for each of the at least one additional point of interest beacon responses, the time indicating a time value between the time zero and a time when each of the point of interest beacon responses was received by the computing device (120);
transmitting (250, 340, 390), by the computing device (120), a notification of the first point of interest beacon response and at least one probing request response to a detection computing system (130), wherein the at least one probing request response comprises at least the time for each of the at least one additional point of interest beacon responses, wherein the detection computing system (130) determines (265) a topography of the merchant location based at least in part on the time value for each of the additional point of interest beacon responses, wherein determining the topography comprises determining the location of each of the point of interest beacons using a predictive model or a classifier model to which the received point of interest beacon responses are added and which determines a probability that each point of interest beacon is in a particular location in the topography; and
receiving (250, 290), by the computing device (120) and from the detection computing system (130), an incentive, offer, reward, recommendation, or additional information about a product, a manufacturer, or a merchant based on a determined location of the computing device (120) in the merchant location, wherein the location of the computing device (120) is determined based on the determined topography of the merchant location.

2. The method of claim 1, wherein the detection system (130) determines that the first point of interest beacon (115A) is located near an entrance to the merchant location based on a determination that the first point of interest beacon (115A) is a first point of interest beacon encountered by the computing device (120) in a chain of point of interest beacons (115A-115X), and/or
wherein each probing request comprises one or more of a request to pair or connect with a Bluetooth beacon, a request to join a WiFi network, or a request to establish a short distance pairing or connection, and/or
wherein a second point of interest beacon (115B) is located near a sales aisle or display at the merchant location.

3. The method of claim 1 or 2, further comprising determining, by the computing device (120), a signal strength of each of all point of interest beacon responses, and, optionally,
wherein the detection system (130) determines a topography of the merchant location based at least in part on the signal strength of each of the additional point of interest beacon responses.

4. The method of any of claims 1 to 3, wherein the detection system (130) determines that another point of interest beacon (115C) is located near a point of sale terminal at the merchant location based on a determination that the another point of interest beacon (115C) is a last point of interest beacon encountered by the computing device in a chain of point of interest beacons, and/or
wherein the detection system (130) uses a Gaussian Mixture Model, decision tree, Markov Decision Process, or other mathematical framework for modeling decision making to determine the topography of the merchant location, and/or
wherein the detection system (130) determines the topography of the merchant location in real time or near real time with receiving each probing request response.

5. The method of any of claims 1 to 4, further comprising receiving, by the computing device (120) and from the detection system (130), an additional incentive, offer, reward, recommendation, or additional information about a product, a manufacturer, or a merchant based on a second determined location of the computing device (120) in the merchant location, wherein the second location of the computing device is determined based on the determined topography of the merchant location.

6. A computer program product, comprising:
a non-transitory computer-readable medium having computer-readable program instructions embodied therein that when executed by a computer cause the computer to carry out the method of any one of claims 1 to 5.

7. The computer program product of claim 6, further comprising:
computer-readable program instructions for transmitting (310, 350) a probing request for a point of interest beacon response, wherein a point of interest beacon (115A-115X) is located in the merchant location,
wherein each probing request comprises one or more of a request to pair or connect with a Bluetooth beacon, a request to join a WiFi network, or a request to establish a short distance pairing or connection.

8. The computer program product of claim 6 or 7, further comprising computer-readable program instructions for determining a signal strength of each the at least one additional point of interest beacon responses, and, optionally,
wherein the detection system (130) determines a topography of the merchant location based at least in part on the signal strength of each of the additional point of interest beacon responses, and/or
wherein the detection system (130) determines the topography of the merchant location in real time or near real time with receiving the probing request response.

9. The computer program product of claim 8, further comprising computer-readable program instructions for receiving from the detection system (130), an additional incentive, offer, reward, recommendation, or additional information about a product, a manufacturer, or a merchant based on a second determined location of the computing device (120) in the merchant location, wherein the second location of the computing device (120) is determined based on the determined topography of the merchant location.

10. A computer-implemented method (200) for determining user locations, comprising:
receiving (340), by one or more computer systems (130) and from a computing device (120), initial data indicating that a computing device (120) is near an area of interest, the initial data comprising an indication that the computing device (120) communicated with a first point of interest beacon (115A) near the area of interest and a time zero, the time zero indicating an initial time when a first point of interest beacon response was received from the first point of interest beacon (115A) by the computing device (120);
receiving (390), by the one or more computer systems (130) and from the computing device (120), additional data associated with a plurality of additional point of interest beacon responses received by the computing device (120) from two or more additional point of interest beacons (115B-115X) at various locations within the area of interest, each of the plurality of additional point of interest beacon response indicating that the computing device (120) communicated with a new point of interest beacon near the area of interest, wherein the additional data further includes a time for each of the plurality of additional point of interest beacon responses, the time indicating a time value between the time zero and a time when each of the plurality of additional point of interest beacon responses was received by the computing device (120);
determining (265), by the one or more computer systems (130), a topography of the area of interest based at least in part on the time value for each of the plurality of additional point of interest beacon responses, wherein determining the topography comprises determining the location of each of the point of interest beacons using a predictive model or a classifier model to which the received point of interest beacon responses are added and which determines a probability that each point of interest beacon is in a particular location in the topography, and
transmitting (250, 290), by the detection computing system (130) and to the computing device (120), an incentive, offer, reward, recommendation, or additional information about a product, a manufacturer, or a merchant based on a determined location of the computing device (120) in the merchant location, wherein the location of the computing device (120) is determined based on the determined topography of the merchant location.

11. The method of claim 10, wherein the additional data further comprises a signal strength of each of the plurality of additional point of interest beacon responses received by the computing device (120), and, optionally,
wherein the topography of the area of interest is further determined at least in part based on the signal strength of each of the plurality of additional point of interest beacon responses received by the computing device (120).

12. The method of claim 10 or 11, further comprising updating the topography based on new beacon response data, and/or
wherein the computing device (120) is a first computing device, and further comprising:
receiving, by one or more computer systems (130), new data indicating that a second computing device is near the area of interest;
receiving, by the one or more computer systems (130), new additional data associated with a plurality of beacon responses received by the second computing device from two or more beacons (115B-115X) within the area of interest; and
determining, by the one or more computer systems (130), a topography of the area of interest based on the beacon response data received from the first computing device (120) and the second computing device.

13. A system for determining user locations, comprising:
a storage device (129); and
a processor (125) communicatively coupled to the storage device (129), wherein the processor executes application code instructions (123) that are stored in the storage device to cause the system to:
transmit (250, 310) a first probing request for a first point of interest beacon response from a first point of interest beacon (115A) located in a merchant location;
in response to transmitting the first probing request, receive (250, 320) via a short-range communication channel the first point of interest beacon response from the first point of interest beacon (115A);
log (250, 330) a time zero, the time zero indicating an initial time when the first point of interest beacon response was received;
transmit (250, 350) additional probing requests for additional point of interest beacon responses from additional point of interest beacons (115B-115X) located at various locations in the merchant location;
in response to transmitting the additional probing requests, receive (250, 370) at least one additional point of interest beacon responses from the additional point of interest beacons (115B-115X);
log (250, 380) a time for each of the at least one additional point of interest beacon responses, the time indicating a time value between the time zero and a time when each of the at least one point of interest beacon responses was received;
transmit (340, 390) a notification of the first point of interest beacon response and at least one probing request response to a detection system (130), wherein the at least one probing request response comprises at least the time for each of the at least one additional point of interest beacon responses, wherein the detection system determines a topography of a merchant location based at least in part on the time value for each of the additional point of interest beacon responses, wherein determining the topography comprises determining the location of each of the point of interest beacons using a predictive model or a classifier model to which the received point of interest beacon responses are added and which determines a probability that each point of interest beacon is in a particular location in the topography; and
receive (290) from the detection system (130), an incentive, offer, reward, recommendation, or additional information about a product, a manufacturer, or a merchant based on a determined location of a computing device (120) in the merchant location, wherein the location of the computing device (120) is determined based on the determined topography of the merchant location.

14. The system of claim 13, wherein each probing request comprises one or more of a request to pair or connect with a Bluetooth beacon, a request to join a WiFi network, or a request to establish a short distance pairing or connection.

15. The system of claim 13 or 14, wherein the processor (125) is further configured to execute computer-executable instructions stored in the storage device (129) to cause the system to determine a signal strength of each the at least one additional point of interest beacon responses, and, optionally,
wherein the detection system (130) determines a topography of the merchant location based at least in part on the signal strength of each of the additional point of interest beacon responses.

## Patentansprüche

1. Computerimplementiertes Verfahren (200) zum Bestimmen von Nutzerstandorten, umfassend:
ein Übermitteln (250, 310), durch eine Rechenvorrichtung (120), einer ersten Sondierungsanfrage nach einer ersten Interessenspunkt-Zeichenantwort von einem ersten Interessenspunkt-Zeichen (115A), das sich in einem Händlerstandort befindet;
in Reaktion auf das Übermitteln der ersten Sondierungsanfrage, ein Empfangen (250, 320), durch die Rechenvorrichtung (120), der ersten Interessenspunkt-Zeichenantwort vom ersten Interessenspunkt-Zeichen (115A);
ein Protokollieren (250, 330) durch die Rechenvorrichtung (120), einer Zeit Null, wobei die Zeit Null eine Anfangszeit anzeigt, wenn die erste Interessenspunkt-Zeichenantwort von der Rechenvorrichtung (120) empfangen wurde;
ein Übermitteln (250, 350), durch die Rechenvorrichtung (120), zusätzlicher Sondierungsanfragen nach zusätzlichen Interessenspunkt-Zeichenantworten von zusätzlichen Interessenspunkt-Zeichen (115B-115X), die sich an verschiedenen Standorten im Händlerstandort befinden;
in Reaktion auf das Übermitteln der zusätzlichen Sondierungsanfragen, ein Empfangen (250, 370), durch die Rechenvorrichtung (120), mindestens einer zusätzlichen Interessenspunkt-Zeichenantworten von den zusätzlichen Interessenspunkt-Zeichen (115B-115X);
ein Protokollieren (250, 380), durch die Rechenvorrichtung (120) einer Zeit für jede der mindestens einen zusätzlichen Interessenspunkt-Zeichenantworten, wobei die Zeit einen Zeitwert zwischen der Zeit Null und einer Zeit anzeigt, wenn jede der Interessenspunkt-Zeichenantworten von der Rechenvorrichtung (120) empfangen wurde;
ein Übermitteln (250, 340, 390), durch die Rechenvorrichtung (120), einer Benachrichtigung über die erste Interessenspunkt-Zeichenantwort und mindestens einer Sondierungsanfragenantwort auf ein Detektionsrechensystem (130), wobei die mindestens eine Sondierungsanfragenantwort mindestens die Zeit für jede der mindestens einen zusätzlichen Interessenspunkt-Zeichenantworten umfasst, wobei das Detektionsrechensystem (130) eine Topographie des Händlerstandorts basierend mindestens teilweise auf dem Zeitwert für jede der zusätzlichen Interessenspunkt-Zeichenantworten bestimmt (265), wobei das Bestimmen der Topographie ein Bestimmen des Standorts für jedes der Interessenspunkt-Zeichen mithilfe eines vorausschauenden Modells oder eines Klassifikatormodells umfasst, zu dem die empfangenen Interessenspunkt-Zeichenantworten addiert werden und das eine Wahrscheinlichkeit bestimmt, dass jedes Interessenspunkt-Zeichen an einem bestimmten Standpunkt der Topographie ist; und
ein Empfangen (250, 290), durch die Rechenvorrichtung (120) und vom Detektionsrechensystem (130), eines Anreizes, Angebots, einer Belohnung, Empfehlung oder zusätzlicher Informationen über ein Produkt, einen Hersteller oder einen Händler, basierend auf einem bestimmten Standort der Rechenvorrichtung (120) im Händlerstandort, wobei der Standort der Rechenvorrichtung (120) basierend auf der bestimmten Topographie des Händlerstandorts bestimmt wird.

2. Verfahren nach Anspruch 1, wobei das Detektionssystem (130) bestimmt, dass sich das erste Interessenspunkt-Zeichen (115A) nahe eines Eingangs zum Händlerstandort befindet, basierend auf einer Bestimmung, dass das erste Interessenspunkt-Zeichen (115A) ein erstes Interessenspunkt-Zeichen ist, das von der Rechenvorrichtung (120) in einer Kette von Interessenspunkt-Zeichen (115A-115X) angetroffen wird, und/oder
wobei jede Sondierungsanfrage eine oder mehrere einer Anfrage nach Paarbildung oder Verbindung mit einem Bluetooth-Zeichen, einer Anfrage nach Aufnahme in ein WiFi-Netzwerk oder einer Anfrage nach Aufbau einer Paarbildung oder Verbindung über kurze Abstände umfasst, und/oder
wobei sich ein zweites Interessenspunkt-Zeichen (115B) nahe eines Verkaufsgangs oder einer Präsentation im Händlerstandort befindet.

3. Verfahren nach Anspruch 1 oder 2, ferner umfassend ein Bestimmen, durch die Rechenvorrichtung (120) einer Signalstärke jeder aller Interessenspunkt-Zeichenantworten und, optional,
wobei das Detektionssystem (130) eine Topographie des Händlerstandorts basierend mindestens teilweise auf der Signalstärke jeder der zusätzlichen Interessenspunkt-Zeichenantworten bestimmt.

4. Verfahren nach einem der Ansprüche 1 bis 3, wobei das Detektionssystem (130) bestimmt, dass sich ein anderes Interessenspunkt-Zeichen (115C) nahe eines nahe eines Verkaufspunkt-Endgeräts im Händlerstandort befindet, basierend auf einer Bestimmung, dass das andere Interessenspunkt-Zeichen (115C) ein letztes Interessenspunkt-Zeichen ist, das von der Rechenvorrichtung in einer Kette von Interessenspunkt-Zeichen angetroffen wird, und/oder
wobei das Detektionssystem (130) ein Gaußsches-Mischungs-Modell, einen Entscheidungsbaum, einen Markov-Entscheidungsprozesses oder einen anderen mathematischen Rahmen zum Modellieren von Entscheidungsfindung verwendet, um die Topographie des Händlerstandorts zu bestimmen und/oder
wobei das Detektionssystem (130) die Topographie des Händlerstandorts in Echtzeit oder nahezu Echtzeit mit Empfang jeder Sondierungsanfrageantwort bestimmt.

5. Verfahren nach einem der Ansprüche 1 bis 4, ferner umfassend ein Empfangen, durch die Rechenvorrichtung (120) und vom Detektionssystem (130), eines zusätzlichen Anreizes, Angebots, einer Belohnung, Empfehlung oder zusätzlicher Informationen über ein Produkt, einen Hersteller oder einen Händler, basierend auf einem zweiten bestimmten Standort der Rechenvorrichtung (120) im Händlerstandort, wobei der zweite Standort der Rechenvorrichtung basierend auf der bestimmten Topographie des Händlerstandorts bestimmt wird.

6. Computerprogrammprodukt, umfassend:
ein nichttransitorisches, computerlesbares Medium mit darin verkörperten computerlesbaren Anweisungen, die bei Ausführung durch einen Computer den Computer veranlassen, das Verfahren nach einem der Ansprüche 1 bis 5 auszuführen.

7. Computerprogrammprodukt nach Anspruch 6, ferner umfassend:
computerlesbare Programmanweisungen zum Übermitteln (310, 350) einer Sondierungsanfrage nach einer Interessenspunkt-Zeichenantwort, wobei sich ein Interessenspunkt-Zeichen (115A-115X) im Händlerstandort befindet,
wobei jede Sondierungsanfrage eine oder mehrere einer Anfrage nach Paarbildung oder Verbindung mit einem Bluetooth-Zeichen, einer Anfrage nach Aufnahme in ein WiFi-Netzwerk oder einer Anfrage nach Aufbau einer Paarbildung oder Verbindung über kurze Abstände umfasst.

8. Computerprogrammprodukt nach Anspruch 6 oder 7, ferner umfassend computerlesbare Programmanweisungen zum Bestimmen einer Signalstärke für jede der mindestens einen zusätzlichen Interessenspunkt-Zeichenantworten, und, optional,
wobei das Detektionssystem (130) eine Topographie des Händlerstandorts basierend mindestens teilweise auf der Signalstärke jeder der zusätzlichen Interessenspunkt-ZeichenAntworten bestimmt, und/oder
wobei das Detektionssystem (130) die Topographie des Händlerstandorts in Echtzeit oder nahezu Echtzeit beim Empfangen der Sondierungsanfragenantwort bestimm.

9. Compuerprogrammprodukt nach Anspruch 8, ferner umfassend computerlesbare Programmanweisungen zum Empfangen vom Detektionssystem (130), eines zusätzlichen Anreizes, Angebots, einer Belohnung, Empfehlung oder zusätzlicher Informationen über ein Produkt, einen Hersteller oder einen Händler, basierend auf einem zweiten bestimmten Standort der Rechenvorrichtung (120) im Händlerstandort, wobei der zweite Standort der Rechenvorrichtung (120) basierend auf der bestimmten Topographie des Händlerstandorts bestimmt wird.

10. Computerimplementiertes Verfahren (200) zum Bestimmen von Nutzerstandorten, umfassend:
ein Empfangen (340), durch ein oder mehrere Computersysteme (130) und von einer Rechenvorrichtung (120), initialer Daten, die anzeigen, dass eine Rechenvorrichtung (120) nahe eines interessierenden Bereichs ist, wobei die initialen Daten eine Anzeige umfassen, dass die Rechenvorrichtung (120) mit einem ersten Interessenspunkt-Zeichen (115A) nahe des interessierenden Bereichs kommunizierte, und einer Zeit Null, wobei die Zeit Null eine initiale Zeit anzeigt, wenn eine erste Interessenspunkt-zeichenantwort vom ersten Interessenspunkt-Zeichen (115A) durch die Rechenvorrichtung (120) empfangen wurde;
ein Empfangen (390), durch das eine oder die mehreren Computersysteme (130) und von der Rechenvorrichtung (120), zusätzlicher Daten, die einer Vielzahl zusätzlicher Interessenspunkt-Zeichenantworten zugeordnet sind, die durch die Rechenvorrichtung (120) von zwei oder mehr zusätzlichen Interessenspunkt-Zeichen (115B-115X) an verschiedenen Standorten im interessierenden Interessensbereich empfangen wurden, wobei jede der Vielzahl zusätzlicher Interessenspunkt-Zeichenantworten anzeigt, dass die Rechenvorrichtung (120) mit einem neuen Interessenspunkt-Zeichen nahe des interessierenden Bereichs kommunizierte, wobei die zusätzlichen Daten ferner eine Zeit für jede der Vielzahl zusätzlicher Interessenspunkt-Zeichenantworten enthält, wobei die Zeit einen Zeitwert zwischen der Zeit Null und einer Zeit anzeigt, wenn jede der Vielzahl zusätzlicher Interessenspunkt-Zeichenantworten durch die Rechenvorrichtung (120) empfangen wurde;
ein Bestimmen (265), durch ein oder mehrere Computersysteme (130), einer Topographie des interessierenden Bereichs basierend mindestens teilweise auf dem Zeitwert für jede der Vielzahl zusätzlicher Interessenspunkt-Zeichenantworten, wobei das Bestimmen der Topographie ein Bestimmen des Standorts für jedes der Interessenspunkt-Zeichen mithilfe eines vorausschauenden Modells oder eines Klassifikatormodells umfasst, zu dem die empfangenen Interessenspunkt-Zeichenantworten addiert werden und das eine Wahrscheinlichkeit bestimmt, dass jedes Interessenspunkt-Zeichen an einem bestimmten Standort in der Topographie ist, und
ein Übermitteln (250, 290), durch das Detektionsrechensystem (130) und an die Rechenvorrichtung (120), eines Anreizes, Angebots, einer Belohnung, Empfehlung oder zusätzlicher Informationen über ein Produkt, einen Hersteller oder einen Händler basierend auf einem bestimmten Standort der Rechenvorrichtung (120) im Händlerstandort, wobei der Standort der Rechenvorrichtung (120) basierend auf der bestimmten Topographie des Händlerstandorts bestimmt wird.

11. Verfahren nach Anspruch 10, wobei die zusätzlichen Daten ferner eine Signalstärke jeder der Vielzahl zusätzlicher Interessenspunkt-Zeichenantworten, die von der Rechenvorrichtung (120) empfangen werden, umfasst, und, optional,
wobei die Topographie des interessierenden Bereichs ferner mindestens teilweise basierend auf der Signalstärke jeder der Vielzahl von zusätzlichen Interessenspunkt-Zeichenantworten, die von der Rechenvorrichtung (120) empfangen werden, bestimmt wird.

12. Verfahren nach Anspruch 10 oder 11, ferner umfassend ein Aktualisieren der Topographie basierend auf neuen Zeichenantwortdaten und/oder
wobei die Rechenvorrichtung (120) eine erste Rechenvorrichtung ist und ferner umfasst:
ein Empfangen, durch ein oder mehrere Computersysteme (130), von neuen Daten, die anzeigen, dass eine zweite Rechenvorrichtung nahe des interessierenden Bereichs ist;
ein Empfangen, durch das eine oder die mehreren Computersysteme (130), neuer zusätzlicher Daten, die einer Vielzahl von Zeichenantworten zugeordnet sind, die durch die zweite Rechenvorrichtung von zwei oder mehr Zeichen (115B-115X) innerhalb eines interessierenden Bereichs empfangen werden; und
ein Bestimmen, durch das eine oder die mehreren Computersysteme (130), einer Topographie des interessierenden Bereichs basierend auf den von der ersten Rechenvorrichtung (120) und der zweiten Rechenvorrichtung empfangenen Zeichenantwortdaten.

13. System zum Bestimmen von Nutzerstandorten, umfassend:
eine Speichervorrichtung (129); und
einen Prozessor (125), der kommunizierend mit der Speichervorrichtung (129) gekoppelt ist, wobei der Prozessor Anwendungscodeanweisungen (123) ausführt, die in der Speichervorrichtung gespeichert sind, um das System zu veranlassen, um:
eine erste Sondierungsanfrage nach einer ersten Interessenspunkt-Zeichenantwort von einem ersten Interessenspunkt-Zeichen (115A), das sich an einem Händlerstandort befindet, zu übermitteln (250, 310);
in Reaktion auf das Übermitteln der ersten Sondierungsanfrage, über einen Kommunikationskanal mit kurzer Reichweite, die erste Interessenspunkt-Zeichenantwort vom ersten Interessenspunkt-Zeichen (115A) zu empfangen (250, 320);
eine Zeit Null zu protokollieren (250, 330), wobei die Zeit Null eine initiale Zeit anzeigt, wenn die erste Interessenspunktantwort empfangen wurde;
zusätzliche Sondierungsanfragen nach zusätzlichen Interessenspunkt-Zeichenantworten von zusätzlichen Interessenspunkt-Zeichen (115B-115X) zu übermitteln (250, 350), die sich an verschiedenen Standorten im Händlerstandort befinden;
in Reaktion auf das Übermitteln der zusätzlichen Sondierungsanfragen, mindestens eine zusätzliche Interessenspunkt-Zeichenantworten von den zusätzlichen Interessenspunkt-Zeichen (115B-115X) zu empfangen (250, 370);
eine Zeit für jede der mindestens einen zusätzlichen Interessenspunkt-Zeichenantworten zu protokollieren (250, 380), wobei die Zeit einen Zeitwert zwischen der Zeit Null und einer Zeit anzeigt, wenn jede der Interessenspunkt-Zeichenantworten empfangen wurde;
eine Benachrichtigung über die erste Interessenspunkt-Zeichenantwort und mindestens eine Sondierungsanfragenantwort an ein Detektionssystem (130) zu übermitteln (340, 390), wobei die mindestens eine Sondierungsanfragenantwort mindestens die Zeit für jede der mindestens einen zusätzlichen Interessenspunkt-Zeichenantworten umfasst, wobei das Detektionssystem eine Topographie des Händlerstandorts basierend mindestens teilweise auf dem Zeitwert für jede der zusätzlichen Interessenspunkt-Zeichenantworten bestimmt, wobei das Bestimmen der Topographie ein Bestimmen der Standort für jeden der Interessenspunkt-Zeichen mithilfe eines vorausschauenden Modells oder eines Klassifikatormodells, zu dem die empfangenen Interessenspunkt-Zeichenantworten addiert werden und das eine Wahrscheinlichkeit bestimmt, dass jedes Interessenspunkt-Zeichen an einem bestimmten Standpunkt der Topographie ist; und
vom Detektionssystem (130) einen Anreiz, ein Angebot, eine Belohnung, Empfehlung oder zusätzliche Informationen über ein Produkt, einen Hersteller oder einen Händler, basierend auf einem bestimmten Standort der Rechenvorrichtung (120) im Händlerstandort zu empfangen (290), wobei der Standort der Rechenvorrichtung (120) basierend auf der bestimmten Topographie des Händlerstandorts bestimmt wird.

14. System nach Anspruch 13, wobei jede Sondierungsanfrage eine oder mehrere einer Anfrage nach Paarung oder Verbindung mit einem Bluetooth-Zeichen, einer Anfrage zur Aufnahme in ein WiFi-Netzwerk oder einer Anfrage zum Aufbau einer Paarbildung oder Verbindung über kurze Abstände umfasst.

15. System nach Anspruch 13 oder 14, wobei der Prozessor (125) ferner konfiguriert ist, um computerausführbare Anweisungen auszuführen, die in der Speichervorrichtung (129) gespeichert sind, um das System zu veranlassen, eine Signalstärke jeder der mindestens einen zusätzlichen Interessenspunkt-Zeichenantworten zu bestimmen, und, optional,
wobei das Detektionssystem (130) eine Topographie des Händlerstandorts basierend mindestens teilweise auf der Signalstärke jeder der zusätzlichen Interessenspunkt-Zeichenantworten bestimmt.

## Revendications

1. Procédé (200) mis en œuvre par ordinateur permettant de déterminer des emplacements d'utilisateurs, comprenant :
l'émission (250, 310), par un dispositif informatique (120), d'une première demande de sondage pour une première réponse de balise de point d'intérêt en provenance d'une première balise de point d'intérêt (115A) située dans un emplacement marchand ;
en réponse à l'émission de la première demande de sondage, la réception (250, 320), par le dispositif informatique (120), de la première réponse de balise de point d'intérêt en provenance de la première balise de point d'intérêt (115A) ;
l'enregistrement (250, 330), par le dispositif informatique (120), d'un temps zéro, le temps zéro indiquant un temps initial lorsque la première réponse de balise de point d'intérêt a été reçue par le dispositif informatique (120) ;
l'émission (250, 350), par le dispositif informatique (120), de demandes de sondage supplémentaires pour des réponses de balise de point d'intérêt supplémentaires en provenance de balises de point d'intérêt supplémentaires (115B-115X) situées au niveau de divers emplacements dans l'emplacement marchand ;
en réponse à l'émission de demandes de sondage supplémentaires, la réception (250, 370), par le dispositif informatique (120), d'au moins une réponse de balise de point d'intérêt supplémentaire en provenance des balises de point d'intérêt supplémentaires (115B-115X) ;
l'enregistrement (250, 380), par le dispositif informatique (120), d'un temps pour chacune de l'au moins une réponse de balise de point d'intérêt supplémentaire, le temps indiquant une valeur temporelle entre le temps zéro et un moment où chacune des réponses de balise de point d'intérêt a été reçue par le dispositif informatique (120) ;
l'émission (250, 340, 390), par le dispositif informatique (120), d'une notification de la première réponse de balise de point d'intérêt et au moins d'une réponse de demande de sondage vers un système informatique de détection (130), ladite au moins une réponse de demande de sondage comprenant au moins le temps pour chacune de l'au moins une réponse de balise de point d'intérêt supplémentaire, ledit système informatique de détection (130) déterminant (265) une topographie de l'emplacement marchand sur la base au moins en partie de la valeur temporelle pour chacune des réponses de balise de point d'intérêt supplémentaires, ladite détermination de la topographie comprenant la détermination de l'emplacement de chacune des balises de point d'intérêt à l'aide d'un modèle prédictif ou d'un modèle classificateur auquel les réponses de balise de point d'intérêt reçues sont ajoutées et qui détermine une probabilité que chaque balise de point d'intérêt se trouve à un endroit particulier dans la topographie ; et
la réception (250, 290), par le dispositif informatique (120) et en provenance du système informatique de détection (130), d'une incitation, d'une offre, d'une récompense, d'une recommandation ou d'informations supplémentaires concernant un produit, un fabricant ou un commerçant sur la base d'un emplacement déterminé du dispositif informatique (120) dans l'emplacement marchand, ledit emplacement du dispositif informatique (120) étant déterminé sur la base de la topographie déterminée de l'emplacement marchand.

2. Procédé selon la revendication 1, ledit système de détection (130) déterminant que la première balise de point d'intérêt (115A) est située près d'une entrée de l'emplacement marchand sur la base d'une détermination que la première balise de point d'intérêt (115A) est une première balise de point d'intérêt rencontrée par le dispositif informatique (120) dans une chaîne de balises de point d'intérêt (115A-115X), et/ou chaque demande de sondage comprenant l'une ou plusieurs d'une demande d'appariement ou de connexion avec une balise Bluetooth, d'une demande de connexion à un réseau WiFi, ou d'une demande pour établir un appariement ou une connexion à courte distance, et/ou une seconde balise de point d'intérêt (115B) étant située près d'une allée de vente ou d'un dispositif d'affichage au niveau de l'emplacement marchand.

3. Procédé selon la revendication 1 ou 2, comprenant en outre la détermination, par le dispositif informatique (120), d'une intensité de signal de chacune de toutes les réponses de balise de point d'intérêt, et, éventuellement, ledit système de détection (130) déterminant une topographie de l'emplacement marchand sur la base au moins en partie de l'intensité de signal de chacune des réponses de balise de point d'intérêt supplémentaires.

4. Procédé selon l'une quelconque des revendications 1 à 3, ledit système de détection (130) déterminant qu'une autre balise de point d'intérêt (115C) est située près d'un terminal de point de vente au niveau de l'emplacement marchand sur la base d'une détermination que l'autre balise de point d'intérêt (115C) est la dernière balise de point d'intérêt rencontrée par le dispositif informatique dans une chaîne de balises de point d'intérêt, et/ou ledit système de détection (130) utilisant un modèle de mélanges gaussien, un arbre de décision, un processus de décision de Markov ou d'autres cadres mathématiques destinés à la modélisation de la prise de décision afin de déterminer la topographie de l'emplacement marchand, et/ou ledit système de détection (130) déterminant la topographie de l'emplacement marchand en temps réel ou presque en temps réel avec la réception de chaque réponse de demande de sondage.

5. Procédé selon l'une quelconque des revendications 1 à 4, comprenant en outre la réception, par le dispositif informatique (120) et en provenance du système de détection (130), d'une incitation, d'une offre, d'une récompense, d'une recommandation supplémentaires ou d'informations supplémentaires concernant un produit, un fabricant, ou un commerçant sur la base d'un second emplacement déterminé du dispositif informatique (120) dans l'emplacement marchand, ledit second emplacement du dispositif informatique étant déterminé sur la base de la topographie déterminée de l'emplacement marchand.

6. Produit-programme informatique, comprenant :
un support non transitoire lisible par ordinateur comportant des instructions de programme lisibles par ordinateur incorporées dans celui-ci qui, lorsqu'elles sont exécutées par un ordinateur, amènent l'ordinateur à effectuer le procédé selon l'une quelconque des revendications 1 à 5.

7. Produit-programme informatique selon la revendication 6, comprenant en outre : des instructions de programme lisibles par ordinateur destinées à émettre (310, 350) une demande de sondage pour une réponse de balise de point d'intérêt, une balise de point d'intérêt (115A-115X) étant située dans l'emplacement marchand, chaque demande de sondage comprenant l'une ou plusieurs d'une demande d'appariement ou de connexion avec une balise Bluetooth, d'une demande de connexion à un réseau WiFi ou d'une demande d'établissement d'un appariement ou d'une connexion à courte distance.

8. Produit-programme informatique selon la revendication 6 ou 7, comprenant en outre des instructions de programme lisibles par ordinateur destinées à déterminer une intensité de signal de chacune de l'au moins une réponses de balise de point d'intérêt supplémentaire, et, éventuellement, ledit système de détection (130) déterminant une topographie de l'emplacement marchand sur la base au moins en partie de l'intensité de signal de chacune des réponses de balise de point d'intérêt supplémentaires, et/ou ledit système de détection (130) déterminant la topographie de l'emplacement marchand en temps réel ou presque en temps réel avec la réception de la réponse de demande de sondage.

9. Produit-programme informatique selon la revendication 8, comprenant en outre des instructions de programme lisibles par ordinateur destinées à la réception en provenance du système de détection (130), d'une incitation, d'une offre, d'une récompense, d'une recommandation supplémentaires ou d'informations supplémentaires sur un produit, un fabricant ou un marchand sur la base d'un second emplacement déterminé du dispositif informatique (120) dans l'emplacement marchand, ledit second emplacement du dispositif informatique (120) étant déterminé sur la base de la topographie déterminée de l'emplacement marchand.

10. Procédé (200) mis en œuvre par ordinateur permettant de déterminer des emplacements d'utilisateurs, comprenant :
la réception (340), par un ou plusieurs systèmes informatiques (130) et en provenance d'un dispositif informatique (120), des données initiales indiquant qu'un dispositif informatique (120) est proche d'une zone d'intérêt, les données initiales comprenant une indication que le dispositif informatique (120) a communiqué avec une première balise de point d'intérêt (115A) près de la zone d'intérêt et un temps zéro, le temps zéro indiquant un instant initial où une première réponse de balise de point d'intérêt a été reçue en provenance de la première balise de point d'intérêt (115A) par le dispositif informatique (120) ;
la réception (390), par le ou les systèmes informatiques (130) et en provenance du dispositif informatique (120), des données supplémentaires associées à une pluralité de réponses de balise de point d'intérêt supplémentaires reçues par le dispositif informatique (120) en provenance de deux balises de point d'intérêt supplémentaires (115B-115X), ou plus, au niveau de divers emplacements dans la zone d'intérêt, chacune de la pluralité de réponses de balise de point d'intérêt supplémentaires indiquant que le dispositif informatique (120) a communiqué avec une nouvelle balise de point d'intérêt près de la zone d'intérêt, lesdites données supplémentaires comprenant en outre un temps pour chacune de la pluralité de réponses de balise de point d'intérêt supplémentaires, le temps indiquant une valeur temporelle entre le temps zéro et un moment où chacune de la pluralité de réponses de balise de point d'intérêt supplémentaires a été reçue par le dispositif informatique (120) ;
la détermination (265), par le ou les systèmes informatiques (130), d'une topographie de la zone d'intérêt sur la base au moins en partie de la valeur temporelle pour chacune de la pluralité de réponses de balise de point d'intérêt supplémentaires, ladite détermination de la topographie comprenant la détermination de l'emplacement de chacune des balises de point d'intérêt à l'aide d'un modèle prédictif ou d'un modèle classificateur auquel les réponses de balise de point d'intérêt reçues sont ajoutées et qui détermine une probabilité que chaque balise de point d'intérêt se trouve dans un emplacement particulier de la topographie, et l'émission (250, 290), par le système informatique de détection (130) et vers le dispositif informatique (120), d'une incitation, d'une offre, d'une récompense, d'une recommandation ou d'informations supplémentaires concernant un produit, un fabricant ou un marchand sur la base d'un emplacement déterminé du dispositif informatique (120) dans l'emplacement marchand, ledit emplacement du dispositif informatique (120) étant déterminé sur la base de la topographie déterminée de l'emplacement marchand.

11. Procédé selon la revendication 10, lesdites données supplémentaires comprenant en outre une intensité de signal de chacune de la pluralité de réponses de balise de point d'intérêt supplémentaires reçues par le dispositif informatique (120), et, éventuellement, ladite topographie de la zone d'intérêt étant en outre déterminée au moins en partie sur la base de l'intensité de signal de chacune de la pluralité de réponses de balise de point d'intérêt supplémentaires reçues par le dispositif informatique (120).

12. Procédé selon la revendication 10 ou 11, comprenant en outre la mise à jour de la topographie sur la base de nouvelles données de réponse de balise, et/ou ledit dispositif informatique (120) étant un premier dispositif informatique, et comprenant en outre :
la réception, par un ou plusieurs systèmes informatiques (130), de nouvelles données indiquant qu'un second dispositif informatique est proche de la zone d'intérêt ;
la réception, par le ou les systèmes informatiques (130), de nouvelles données supplémentaires associées à une pluralité de réponses de balise reçues par le second dispositif informatique en provenance de deux balises (115B-115X), ou plus, dans la zone d'intérêt ; et
la détermination, par le ou les systèmes informatiques (130), d'une topographie de la zone d'intérêt sur la base des données de réponse de balise reçues en provenance du premier dispositif informatique (120) et du second dispositif informatique.

13. Système destiné à la détermination d'emplacements d'utilisateurs, comprenant : un dispositif de stockage (129) ; et
un processeur (125) couplé en communication au dispositif de stockage (129), ledit processeur exécutant des instructions de code d'application (123) qui sont stockées dans le dispositif de stockage pour amener le système à :
émettre (250, 310) une première demande de sondage pour une première réponse de balise de point d'intérêt en provenance d'une première balise de point d'intérêt (115A) située dans un emplacement marchand ;
en réponse à l'émission de la première demande de sondage, recevoir (250, 320) par l'intermédiaire d'un canal de communication à courte portée la première réponse de balise de point d'intérêt en provenance de la première balise de point d'intérêt (115A) ;
enregistrer (250, 330) un temps zéro, le temps zéro indiquant un temps initial lorsque la première réponse de balise de point d'intérêt a été reçue ;
émettre (250, 350) des demandes de sondage supplémentaires pour des réponses de balise de point d'intérêt supplémentaires à partir de balises de point d'intérêt supplémentaires (115B-115X) situées au niveau de divers emplacements dans l'emplacement marchand ;
en réponse à l'émission des demandes de sondage supplémentaires, recevoir (250, 370) au moins une réponse de balise de point d'intérêt supplémentaire en provenance des balises de point d'intérêt supplémentaires (115B-115X) ;
enregistrer (250, 380) un temps pour chacune de l'au moins une réponse de balise de point d'intérêt supplémentaire, le temps indiquant une valeur temporelle entre le temps zéro et un moment où chacune de l'au moins une réponse de balise de point d'intérêt a été reçue ;
émettre (340, 390) une notification de la première réponse de balise de point d'intérêt et au moins une réponse de demande de sondage à un système de détection (130), ladite au moins une réponse de demande de sondage comprenant au moins le temps pour chacune de l'au moins une réponse de balise de point d'intérêt supplémentaire, ledit système de détection déterminant une topographie d'un emplacement marchand sur la base au moins en partie de la valeur temporelle pour chacune des réponses de balise de point d'intérêt supplémentaires, ladite détermination de la topographie comprenant la détermination de l'emplacement de chacune des balises de point d'intérêt à l'aide d'un modèle prédictif ou d'un modèle classificateur auquel les réponses de balise de point d'intérêt reçues sont ajoutées et qui détermine une probabilité que chaque balise de point d'intérêt se trouve dans un emplacement particulier dans la topographie ; et
recevoir (290) en provenance du système de détection (130), une incitation, une offre, une récompense, une recommandation ou des informations supplémentaires concernant un produit, un fabricant ou un commerçant sur la base d'un emplacement déterminé d'un dispositif informatique (120) dans l'emplacement marchand, ledit emplacement du dispositif informatique (120) étant déterminé sur la base de la topographie déterminée de l'emplacement marchand.

14. Système selon la revendication 13, chaque demande de sondage comprenant l'une ou plusieurs d'une demande d'appariement ou de connexion avec une balise Bluetooth, d'une demande de connexion à un réseau WiFi ou d'une demande d'établissement d'un appariement ou d'une connexion à courte distance.

15. Système selon la revendication 13 ou 14, ledit processeur (125) étant en outre configuré pour exécuter des instructions exécutables par ordinateur stockées dans le dispositif de stockage (129) pour amener le système à déterminer une intensité de signal de chacune de l'au moins une réponse de balise de point d'intérêt supplémentaire et, éventuellement, ledit système de détection (130) déterminant une topographie de l'emplacement marchand sur la base au moins en partie de l'intensité de signal de chacune des réponses de balise de point d'intérêt supplémentaires.
